(19) Europäisches Patentamt
European Patent Office
Office européen des brevets

(11) Publication number: 0 066 241 B1

# (12) EUROPEAN PATENT SPECIFICATION

(45) Date of publication of patent specification: 08.05.85

(51) Int. Cl.$^4$: C 08 C 19/36, C 08 L 15/00, C 08 C 19/28

(21) Application number: 82104564.8

(22) Date of filing: 25.05.82

## (54) Modified cis-1,4-polyisoprene rubber, a process for its manufacture, a vulcanized modified cis-1,4-polyisoprene rubber composition and the use of the modified cis-1,4-polyisoprene rubber for preparing vulcanized shaped articles.

(30) Priority: 26.05.81 JP 80641/81

(43) Date of publication of application:
08.12.82 Bulletin 82/49

(45) Publication of the grant of the patent:
08.05.85 Bulletin 85/19

(84) Designated Contracting States:
DE FR GB IT NL

(56) References cited:
DE-A-2 944 082
DE-B-2 838 930
FR-A-2 300 108
US-A-3 965 076

(73) Proprietor: KURARAY CO., LTD.
1621 Sakazu
Kurashiki-City Okayama Prefecture (JP)

(72) Inventor: Takamatsu, Hideo
98, Ohta, Hasaki-cho
Kashima-gun Ibaraki-Pref. (JP)
Inventor: Minatono, Shobu
98, Ohta, Hasaki-cho
Kashima-gun Ibaraki-Pref. (JP)

(74) Representative: Vossius Vossius Tauchner Heunemann Rauh
Siebertstrasse 4 P.O. Box 86 07 67
D-8000 München 86 (DE)

EP 0 066 241 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a modified cis-1,4-polyisoprene rubber. More particularly, it is concerned with a solid synthetic cis-1,4-polyisoprene rubber modified by incorporation of succinimide residues carrying at the imide nitrogen a hyrocarbon group containing a tertiary amino group.

Synthetic cis-1,4-polyisoprene rubber (according to ASTM nomenclature hereinafter referred to as IR) has a molecular structure which is similar to that of natural rubber (according to ASTM nomenclature hereinafter referred to as NR). IR is closer to NR in its properties than any other synthetic rubber. It has very good workability, and the vulcanized products have excellent physical properties. It is a general-purpose rubber which is used as a substitute for NR in the manufacture of automobile tyres, industrial rubber products, rubber footwear, and the like. As IR is a synthetic polymer, it contains impurities and foreign matter in much smaller quantities than NR. This feature is of considerable importance, since it reduces the possibility of the production of rejects. This is one of the outstanding features of IR which has created a great demand for IR in certain fields of applications.

IR is, however, considerably inferior to NR in green strength. Accordingly, IR will show cold flow during storage, and various kinds of trouble are likely to occur during the manufacture of rubber products as will hereinafter be pointed out. When unvulcanized rubber compositions are put together and molded to form a tyre, they are likely to undergo sagging or change in their physical properties, or the type cords embedded in the unvulcanized materials are likely to get displaced, resulting in failure to provide uniform types. The low green strength of IR, however, means good flowability. It is, therefore, one reason to blend IR with NR despite some reduction in its green strength. Common radial-ply tyres, which are used in large amount recently, need high hardness and modulus, but high and uniform hardness generally was introduced by high hardness of the vulcanized material and flowability of the uncured material. However, the poor flowability of NR, if it is used alone, is often likely to result in various kinds of trouble, including failure to provide a smooth surface or clearly engraved pattern, during calendering, extrusion molding, press vulcanization, or similar operations which are performed at a temperature of, say, 80°C to 150°C.

It has, therefore, been thought desirable to develop rubber having as high a green strength as that of NR in the vicinity of ordinary room temperature, and as high a degree of flowability as that of IR at a relatively high temperature, and which shows excellent physical properties when vulcanized.

Various attempts have hitherto been made to improve the green strength of IR. A typical attempt resides in the addition of maleic anhydride to IR. This method is considered as one of the most effective methods, since modified IR can be produced inexpensively by a relatively simple reaction. The modified IR obtained by this method is, however, inferior to IR in flowability at elevated temperatures, and the physical properties of its vulcanizate are not satisfactory, though it is comparable to NR in green strength.

Japanese Laid-Open Patent Specification No. 102148/73 proposes the incorporation into synthetic rubber, such as IR, of a maleic acid amide of the general formula

$$\begin{array}{l} C\ H\ COOH \\ \| \\ C\ H\ CONHR \end{array} \quad \text{or} \quad \begin{array}{l} C\ H\ CONHR \\ \| \\ C\ H\ CONHR \end{array}$$

where R stands for a hydrogen atom, or an alkyl, phenyl, chlorophenyl, nitrophenyl, benzyl, formylaminophenyl or cyclohexyl group, or a derivative of maleamide, or maleinhydrazide in order to improve its green strength without lowering the physical properties of its vulcanizate. Example 1 shown therein indicates certain improvements in the green strength of synthetic rubber at ordinary room temperature, and the strength and modulus of its vulcanizate, but simultaneously suggests the necessity for improvement in flowability and workability at elevated temperatures, since the tensile strength of the uncured compound measured at 80°C was as high as, or even higher than that of NR which is at least 1.6 times higher than that of IR.

Japanese Laid-Open Patent Specification No. 45198/76 proposes that an amine, such as an amino alcohol or polyethyleneimine having at least three amino groups, be incorporated into modified IR containing maleic anhydride. Although the incorporation of an amino alcohol improves the green strength of the modified IR, it is not so high as that of NR, and the tensile strength and hardness of its vulcanizate are not so high as those of NR. The use of polyethyleneimide does not improve the flowability of the modified IR at elevated temperatures; in other words, its tensile strength at elevated temperatures is not so low as that of IR.

As is obvious from the foregoing description, there has hitherto not been available any modified IR that is satisfactory in all of such aspects as green strength, flowability and workability at elevated temperatures, and the tensile strength and hardness of its vulcanizate. Moreover, the vulcanizates of modified IR obtained by any known method have generally been low in tear strength, even if their tensile strength and hardness are improved.

The principal object of this invention is therefore to provide a novel modified cis-1,4-polyisoprene rubber which is excellent in green strength and flowability at elevated temperatures, and its vulcanizate is comparable to, or better than NR in tensile strength and hardness. This invention improves the drawbacks of IR and modified IR which have hereinabove been pointed out.

It is another object of this invention to provide modified cis-1,4-polyisoprene rubber of which the vulcanizate is not only high in tensile strength and hardness, but is also satisfactorily high in tear strength. The term tensile strength means tensile strength at break.

It is still another object of this invention to provide a process for manufacturing such modified cis-1,4-polyisoprene rubber.

It is a further object of this invention to provide a rubber composition containing such modified cis-1,4-polyisoprene rubber and to use it for preparing vulcanized shaped articles.

According to this invention, the aforesaid objects are attained by a modified cis-1,4-polyisoprene rubber on the basis of a solid synthetic cis-1,4-polyisoprene rubber containing per 100 repeating isoprene units as a side chain at least 0.01 mole of a functional group of the general formula (I)

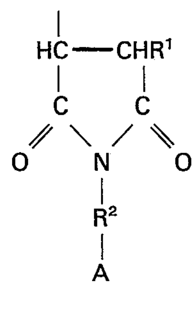

wherein $R^1$ is hydrogen or a covalent bond with the rubber molecule, $R^2$ is a hydrocarbon residue having not more than 20 carbon atoms, and optionally containing oxygen or sulfur in its principal chain, and A is a dihydrocarbylamino residue having not more than 20 carbon atoms, or a heterocyclic residue containing at least one tertiary nitrogen atom as a hetero nitrogen atom. The heterocyclic residue may contain one or more further hetero atoms, such as nitrogen, oxygen or sulfur atoms, in addition to the teriary nitrogen atom.

It is unexpected that the modified rubber of this invention can be vulcanized at a rate which is equal to, or higher than the vulcanization rate of NR:

The modified rubber of this invention can be manufactured by two methods:

(1) adding to synthetic cis-1,4-polyisoprene solid rubber (possibly as a solution) at least 0.01 mole of a compound selected from the group consisting of maleic anhydride, maleic acid, a maleic acid monoester and a maleic acid diester per 100 repeating isoprene units in the rubber, adding then an amine of the general formula (II) $H_2N—R^2—A$, where $R^2$ and A are as defined in connection with the general formula (I), and performing a dehydration or dealcoholization to form an imide ring; or

(2) adding to synthetic cis-1,4-polyisoprene solid rubber (possibly as a solution) at least 0.01 mole of a maleimide derivative of the general formula (III)

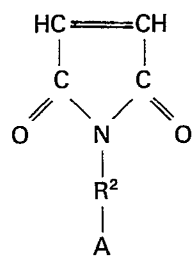

where $R^2$ and A are as defined in connection with the general formula (I), per 100 repeating isoprene units in the rubber.

The invention will now be described in further detail with reference to the accompanying drawings, in which:

Figures 1, 2 and 3 are graphs showing the infrared absorption spectra of IR, modified IR obtained by adding maleic anhydride, and modified IR obtained by further adding thereto (dimethylamino)propylamine and, therefore, containing N-(γ-dimethylamino)propyl succinimide groups, respectively, which will all appear in Exmaple 1, and

Figures 4 and 5 are curves showing the stress-strain characteristics, at 25°C and 100°C, respectively, of unvulcanized rubber compositions containing as the rubber constituent the modified IR obtained by adding (dimethylamino)-propylamine to IR modified with maleic anhydride and thus containing N-(γ-dimethylamino)propylsuccinimide residues, which will appear in Example 2. They also show the stress-strain characteristics of NR, IR and modified IR obtained by adding only monomethyl maleate. Curves A, B, NR and IR show the stress-strain characteristics of the modified IR containing N-(γ-dimethylamino)propyl succinimide residues, modified IR obtained by adding monomethyl maleate, natural rubber, and IR (unmodified), respectively.

For the purpose of this invention, it is possible to use a solid synthetic cis-1,4-polyisoprene rubber (IR) obtained by polymerizing isoprene with a Ziegler or anionic catalyst, and having a cis-1,4 content of at least 80%. From the standpoint of physical properties, however, it is preferable to use high cis-1,4-polyisoprene rubber obtained with a Ziegler catalyst, and having a cis-1,4 content of at least 95% It is possible to use a rubber having any molecular weight if it is a solid, but it is preferable to use a rubber having a molecular weight of 200,000 to 2,000,000.

The amine used for the preparation of the modified cis-1,4-polyisoprene rubber of this invention by the first method above described has the general formula II, $H_2N—R^2—A$, in which $R^2$ is a divalent hydrocarbon residue having not more than 20 carbon atoms and optionally containing an oxygen or a sulfur atom in its principal (main) chain. The preferred group $R^2$ is

(a) an alkylene residue having not more than 20 carbon atoms, and optionally forming a branch;

(b) a cycloalkylene residue having not more than 20 carbon atoms, and optionally forming a branch;

(c) a hetero-atom containing hydrocarbon residue of the general formula $\lnot(R^3—Z\rnot)_nR^4—$, in which $R^3$ and $R^4$ stand for the same or different groups selected from among ethylene, lower alkyl-substituted ethylene and propylene groups, Z stands for oxygen or sulfur, and n is an integer which is not smaller than 1, and having not more than 20 carbon atoms;

(d) an aromatic hydrocarbon residue selected from between arylenealkaarylene and aralkarylene groups; or

(e) an aromatic hydrocarbon residue containing a hetero atom (oxygen or sulfur), and having not more than 20 carbon atoms, such as an aryloxyarylene group.

In the general formula (II), A may, for example, stand for:

(i) a dialkylamino residue having not more than 20 carbon atoms;

(ii) a diarylamino residue having not more than 20 carbon atoms;

(iii) a diaralkylamino residue having not more than 20 carbon atoms;

(iv) any other di-hydrocarbon substituted amino residue of the general formula

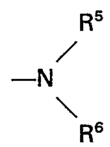

in which $R^5$ and $R^6$ stand for the same or different hydrocarbon residue having not more than 20 carbon atoms; or

(v) a 5- or 6-membered heterocyclic residue containing at least one tertiary nitrogen atom as a hetero nitrogen atom. The heterocyclic residue may contain one or more further hetero atoms, such as oxygen or sulfur atoms, in addition to the tertiary nitrogen atom.

In view of the economical considerations, it is preferred to use as $R^2$ and A residues having not more than 20 carbon atoms, and more preferably 2 to 12 carbon atoms each.

Typical examples of the amines which may be used for this invention include (dialkylamino)alkylamines (N,N-dialkylaminoalkoxy)alkylamines, amines obtained by substitution of poly(oxyalkylene) for alkoxy in the (N,N-dialkylaminoalkoxy)-alkylamine mentioned above, p-N,N-dialkylaminomethylbenzylamines, p - N,N - dialkylaminophenylamines, N - aminoalkylpiperidines, N - aminoalkyl - pipecolines, N-aminoalkyl - morpholines, 1 - aminoalkyl - 4 - alkyl - piperazines, aminoalkyl pyridines, and picolylamines. It is also possible to use (dialkylamino) alkylamines having a (dialkylamino)alkyl residue substituted for hydrogen in an alkylene residue between the nitrogen atoms. It is particularly preferred to use (dialkylamino)alkylamines, such as (dimethylamino)ethylamine, (diethylamino)ethylamine, (dipropylamino)ethylamine, (dimethylamino)propylamine, (diethylamino)propylamine, (dimethylamino)butylamine, (diethylamino)butylamine, (dimethylamino)hexylamine or (dimethylamino)decylamine, or (N,N - dialkylamino)alkoxyalkylamines, such as (N,N-dimethylamino)ethoxyethylamine, (N,N - dimethylamino)ethoxypropylamine, or α - (3 - aminopropyl) - ω - (3 - dimethylaminopropyl)oxy - poly(oxy - 1,2 - ethanediyl)

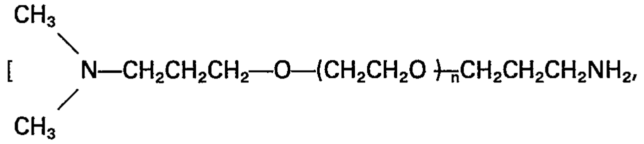

in which n is an integer of 1 to 7]. If polyethyleneimine, an amino-alcohol or N,N′-diphenyl-p-phenylenediamine is used instead of the amines as hereinabove listed, the objects of this invention cannot be attained, as will hereinafter be set forth by way of comparative examples.

The maleimide derivative used as a modifying agent for the manufacture of the modified IR of this invention by the second method above described has the general formula (III)

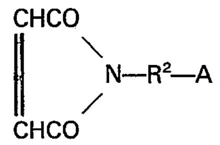

in which $R^2$ and A are as hereinbefore defined. It is particularly preferred to use a N-dialkylamino)alkylmaleimide, such as N-(β-dimethylamino)ethylmaleimide, N - (β-diethylamino)ethylmaleimide, N - (γ - dimethylamino)propylmaleimide, N - (γ-diethylamino)propylmaleimide, N - (δ - dimethylamino)butylmaleimide, or N - (δ - diethylamino)butylmaleimide.

Maleic anhydride, maleic acid, a maleic acid monoester or a diester, or a maleic acid derivative, such as a maleimide of the general formula (III), is added to IR in the form of a solution or in a solid state. In the former case, IR is dissolved in a solvent, such as an aliphatic, alicyclic or aromatic hydrocarbon, a maleic acid derivative, for example, is added to the solution, and the solution is heated optionally in the presence of a free radial forming agent, such as a peroxide or azo compound. Although there is no particular limitation to the reaction conditions, the mixture is usually heated at a temperature of 25°C to 250°C, preferably 50°C to 200°C, for a period of 0.1 minute to 100 hours, preferably 0.5 to 30 hours. In the latter case, a maleic acid derivative, for example, is mixed with IR by using a roll mill, kneader, Banbury mixer, screw extruder, or the like. The reaction may be performed in the presence of a catalyst or free radical forming agent, such as a peroxide or azo compound, though it often does not require any such catalyst. Although there is no particular limitation to the reaction conditions, the reaction is usually performed at a temperature of 25°C to 300°C, preferably 50°C to 250°C, for a period of 0.1 minute to 100 hours, preferably 0.5 minute to 30 hours.

If the quantity of the maleic acid derivative in the IR is too small, hardly any effect of modification can be expected, and if it is too large, there is obtained an uncured compound having too high a tensile strength to ensure satisfactory workability at elevated temperatures. Therefore, the quantity of the maleic acid derivative is preferably in the range of 0.01 to 10 moles, particularly 0.01 to 2 moles, and more preferably 0.05 to 1.0 mole, per 100 repeating isoprene units in the IR.

The modified IR obtained by adding maleic anhydride, maleic acid, or a maleic ester is then reacted with an amine of the general formula (II) at a temperature of 0° to 150°C. for a period of 0.1 minute to 20 hours. In this reaction the acid anhydride or carboxyl groups are converted into amide groups which are then converted to cyclic amide groups by a dehydration or dealcoholization reaction. If the reaction is not complete, some monosuccinamidecarboxylic acid is likely to remain in the product. If its quantity is small, there is no problem, but if it is large, there is the likelihood that the properties claimed to be obtained by this invention may not be obtained. It is, therefore, preferred to heat or otherwise treat the product so that the monosuccinamidecarboxylic acid groups are converted to imide groups.

The modified IR of this invention is excellent in green strength, workability at elevated temperatures, rate of vulcanization, and its vulcanizate exhibits very good physical properties. Therefore, it is useful not only for those applications for which IR has hitherto been used, i.e. as general purpose rubber, but for other applications as well.

For such applications, it is possible to use compounding agents employed ordinarily for the manufacture of finished rubber products. Examples of the compounding agents include a reinforcing agent (5—200 phr), such as carbon black (soft or hard), or calcium carbonate, a filler (5—200 phr), a vulcanizing agent (0.1—10 phr), such as sulfur or a peroxide, an auxiliary vulcanization accelerator (0.01—7 phr), an antioxidant (0.05—5 phr), a softener (1—40 phr), such as an oil, and a resin (1—200 phr), such as rosin, a terpene, petroleum phenol, epoxy, polyester or polyamide resin. Examples of rubber constituents include natural rubber, untreated IR, styrenebutadiene rubber, polybutadiene rubber and other synthetic rubbers, and in some cases, mixtures thereof with a liquid polyisoprene or polybutadiene. In the event the modified IR of this invention is mixed with unmodified IR, it is important to ensure that the modified IR and the unmodified IR have a weight ratio of 5:95 to 95:5, and that the mixture contains 0.01 to 2.0 mole% of the compound of the general formula I or II.

The modified IR of this invention may advantageously be employed to manufacture various parts of an automobile tyre, such as treads, carcasses, beads, bead fillers or rim strips, industrial products such as V-belts, hoses, vibration insulators or rubber rolls, rubber-coated fabrics, rubber shoes, rubber threads, rubber rings, sponge rubber articles, and the like.

The invention will now be described more specifically with reference to several examples which are not intended to limit the scope of this invention. In these examples, the rubber was tested in accordance with the test procedure of JIS K-6301. Parts and percentages are shown by weight.

Example 1

Synthetic cis-1,4-polyisoprene rubber prepared with a Ziegler catalyst, and having a cis-1,4 content of 98% and a molecular weight of 840,000 (Kuraprene IR-10; product of Kuraray Isoprene Chemical Co., Ltd., Japan) was dissolved in toluene to form a 10% IR solution. Maleic anhydride was added to the solution so that it contains 2.5 parts of maleic anhydride per 100 parts of IR. The solution was heated at 180°C. for five hours to yield a solution of IR modified with maleic anhydride. The modified IR was recovered from the

solution, and purified. The reaction ratio of maleic anhydride was 12%. The total reflection spectrum of the modified IR was obtained at an incidence angle of 70° and by 20 times of integration by employing an infrared spectrophotometer (Digilab's FTS-20% Fourier transformation type). The IR-spectrum obtained is shown in Figure 2, while Figure 1 shows the infrared spectrum of unmodified IR. As is obvious from Figures 1 and 2, the peaks which are due to the carbonyls of the acid anhydride groups are found at 1,790 $cm^{-1}$ and 1,870 $cm^{-1}$, and they confirmed the formation of the IR modified with maleic anhydride. The quantity of the succinic anhydride residue in the IR modified with maleic anhydride, which was determined by IR-absorption at 1,790 $cm^{-1}$ and 1,870 $cm^{-1}$, was 0.21 mole per 100 repeating isoprene units in the IR.

A 10% toluene solution of the modified IR obtained as hereinabove described was heated to 100°C. Five parts of (dimethylamino)propylamine, per 100 parts of the modified IR, were added to the solution. After the solution had been stirred for 30 minutes, its temperature was raised again, and it was heated at 180°C. for three hours. After the reaction product had been cooled, it was poured into methanol, recovered and vacuum dried. Figure 3 shows the infrared absorption spectrum of the product. It did not show any absorption that had been observed in the vicinity of 1,790 $cm^{-1}$ or 1,870 $cm^{-1}$ due to the carbonyls of the acid anhydride group (succinic anhydride residues) in the case of the IR modified with maleic anhydride, but instead of it, showed the absorptions due to the carbonyls of succinimide residue in the vicinity of 1,700 $cm^{-1}$ and 1,770 $cm^{-1}$. These facts ascertained the conversion of the succinic anhydride residues in the modified IR by N - (γ - dimethylamino)propyl succinimide residues, and hence, the formation of a modified IR containing 0.21 mole of N - (γ - dimethylamino)propylsuccinimide residues per 100) repeating isoprene units in the IR.

For comparison purposes, several other kinds of modified IR were likewise prepared by adding, instead of (dimethylamino)propylamine, an equal molar quantity of ethanolamine, di-n-propylamine, ethylenediamine, polyethyleneimine having a molecular weight of 1,200 (PEI SP-012, product of Nippon Shokubai Kagaku Kogyo K.K., Japan) or N,N'-diphenyl-p-phenylenediamine (Antigen P, product of Sumitomo Chemical Industrial Co., Ltd., Japan) to the IR modified with maleic anhydride.

Rubber compositions (gum compounds) were prepared from the modified IR, unmodified IR and NR in accordance with the recipe shown in Table 1. Strips having a thickness of 2 mm and a width of 6 mm were prepared from the uncured rubber compositions (unvulcanizates), and tested for tensile strength, yield point, 300% modulus ($M_{300}$), tensile strength and elongation at break by an Instron tester at a pull rate of 50 mm/min. at 25°C and 100°C. The rubber compositions were press cured at 145°C for 30 minutes so form vulcanizates. The vulcanizates were similarly tested for $M_{300}$, tensile strength, and elongation at break at 25°C. They were also tested for hardness and tear strength. The test results are shown in Table 2.

TABLE 1

| | |
|---|---|
| Rubber | 100 parts |
| HAF carbon black | 45 〃 |
| Zinc white | 5 〃 |
| Stearic acid | 3 〃 |
| Sulfur | 2 〃 |
| Vulcanization accelerator[1)] | 1 part |
| Antioxidant[2)] | 1 〃 |

[1)] N-oxydiethylene-2-benzothiazolylsulfenamide, NOCCELR MAS, product of Ouchi Shinko Kagaku Kogyo K.K., Japan;

[2)] Poly(2,2,4-trimethyl-1,2-dihydroquinoline), NOCRAC 224, product of Ouchi Shinko Kagaku Kogyo K.K., Japan.

TABLE 2

| | Example of this invention | Comparative example 1 | Comparative example 2 | Comparative example 3 | Comparative example 4 | Comparative example 5 | Control example[1)] 1(IR) | Control example[2)] 2(NR) |
|---|---|---|---|---|---|---|---|---|
| Amine used for modification of IR modified with maleic anhydride | Dimethyl-aminopropyl-amine | Ethanol-amine | Di-n-propyl-amine | Ethylene-diamine | Polyethyl-eneimine | N,N'-di-phenyl-p-phenylene-diamine | — | — |
| Mooney viscosity ($ML_{1+4}$ 100°C) | 59 | 60 | 61 | 62 | 63 | 61 | 57 | 55 |
| Physical properties of unvulcanizate at 25°C | | | | | | | | |
| Yield point ($kg/cm^2$) | 1.9 | 1.6 | 2.0 | 2.0 | 2.3 | 1.7 | 1.1 | 1.9 |
| $M_{300}$ ($kg/cm^2$) | 3.4 | 2.7 | 3.6 | 3.5 | 3.9 | 3.2 | 0.7 | 4.0 |
| Tensile strength ($kg/cm^2$) | 11.9 | 6.5 | 12.3 | 10.8 | 8.5 | 9.8 | 0.6 | 12.8 |
| Elongation at break (%) | 570 | 690 | 590 | 550 | 510 | 530 | 680 | 550 |
| Physical properties of unvulcanizate at 100°C | | | | | | | | |
| Yield point ($10^{-1}$ $kg/cm^2$) | 2.0 | 3.0 | 5.0 | 6.0 | 8.0 | 6.0 | 2.0 | 3.0 |
| $M_{300}$ ($10^{-1}$ $kg/cm^2$) | 2.0 | 2.0 | 4.0 | 5.0 | 6.0 | 5.0 | | 2.0 |
| Tensile strentth ($10^{-1}$ $kg/cm^2$) | 1.0 | 2.0 | 3.0 | 5.0 | 7.0 | 7.0 | 1.0 | 2.0 |
| Elongation at break (%) | 320 | 310 | 340 | 490 | 520 | 590 | 210 | 300 |

TABLE 2 (contd.)

| | Example of this invention | Comparative example 1 | Comparative example 2 | Comparative example 3 | Comparative example 4 | Comparative example 5 | Control example[1] 1(IR) | Control example[2] 2(NR) |
|---|---|---|---|---|---|---|---|---|
| Amine used for modification of IR modified with maleic anhydride | Dimethyl-aminopropyl-amine | Ethanol-amine | Di-n-propyl-amine | Ethylene-diamine | Polyethyl-eneimine | N,N'-di-phenyl-p-phenylene-diamine | — | — |
| Physical properties of vulcanizate at 25°C | | | | | | | | |
| $M_{300}$ ($kg/cm^2$) | 162 | 139 | 144 | 143 | 144 | 147 | 138 | 151 |
| tensile strength ($kg/cm^2$) | 300 | 297 | 298 | 287 | 292 | 298 | 299 | 301 |
| Elongation at break (%) | 560 | 540 | 540 | 550 | 540 | 560 | 550 | 530 |
| Hardness (JIS-A) | 66 | 61 | 62 | 62 | 63 | 63 | 61 | 65 |
| Tear strength ($kg/cm^2$) | 75 | 71 | 70 | 65 | 60 | 62 | 76 | 88 |

Notes:
[1] In Control Example 1, IR (Kuraprene IR-10) was used as the rubber constituent.
[2] In Control Example 2, NR (SMR-5L) was used as the rubber constituent.

As can be seen from Table 2, the tensile strength at 25°C of the uncured gum compound of the modified IR obtained by adding maleic anhydride to IR, and reacting the adduct with (dimethylamino)propylamine and containing N - (γ - dimethylamino)propylsuccinimide residues was improved to a level comparable to that of NR. Its tensile strength at elevated temperature (100°C.) was nearly as low as that of IR, ensuring good flowability, which means good workability at elevated temperature (100°C.) as will hereinafter be described in Example 3. Its vulcanizate was improved in 300% modulus and hardness and comparable to NR in tensile strength and elongation at break. On the other hand, the product obtained by employing ethanolamine as the modifying agent did not show any improvement in tensile strength at 25°C. and its vulcanizate was low in 300% modulus and hardness. The products obtained by employing di-n-propylamine, ethylenediamine, polyethyleneimine and N,N' - diphenyl - p - phenylenediamine were all much better than NR in breaking strength at 100°C., which means their poor flowability at elevated temperature (100°C.). Their vulcanizates were inferior in 300% modulus and hardness.

Example 2

Modified IR containing N-(γ-dimethylamino)propylsuccinimide residues were prepared in accordance with the procedure of Example 1, except that 12 parts of maleic acid and 20 parts of (dimethylamino)propylamine were used. The modified IR contained 1.41 moles of succinimide residues per 100 repeating isoprene units in the IR.

For comparison purposes, a modified IR containing monomethyl succinate residues was prepared in accordance with the procedure of Example 1, except that monomethyl maleate was used instead of maleic anhydride. It contained 0.51 moles of monomethyl succinate residues per 100 repeating isoprene units in the IR.

Uncured rubber compositions having a Mooney viscosity of about 80 were prepared from each of those two types of modified IR, unmodified IR and NR in accordance with the recipe adopted in Example 1. The stress-strain characteristics of the uncured rubber compositions at 25°C and 100°C were examined in accordance with the procedures employed in Example 1. Figure 4 shows their stress-strain characteristics at 25°C, while Figure 5 shows the same at 100°C. In Figures 4 and 5, the abscissa indicates strain, and the ordinate stress. Curves A, B, NR and IR show the stress-strain characteristics of the uncured rubber compositions prepared from the modified IR containing N - (γ - dimethylamino)propylsuccinimide residues (Mooney viscosity: 78), the modified IR containing monomethylsuccinate residues (Mooney viscosity: 79), natural rubber (Mooney viscosity: 81), and synthetic cis - 1,4 - polyisoprene rubber (Mooney viscosity: 80), respectively.

As can be seen from Figures 4 and 5, only the modified IR containing N - (γ - dimethylamino)propylmalsuccinimide residues showed a high green strength at low temperature (25°C.), and its yield stress and tensile strength at elevated temperature (100°C) were lower than those of any other uncured rubber composition. This latter fact is particularly important, and means its high workability at elevated temperature. The modified IR containing monomethyl maleate residues showed a by far higher yield stress than that of NR, which is inferior in workability at elevated temperature, though its green strength at 25°C was improved. This modified IR is, thus, very poor in flowability at elevated temperature.

Example 3

IR having a molecular weight of 570,000 was prepared by masticating the IR (IR-10) employed in Example 1.

100 parts of the IR thus obtained were dissolved in toluene. Three parts of maleic anhydride were added to the IR solution, and the solution was heated at 180°C. for 10 hours. The infrared absorption spectrum of the modified IR indicated the presence of 0.3 moles of succinic anhydride residues per 100 repeating isoprene units in the IR. A modifying agent, (I) ω - (N,N - dimethylamino)decylamine, (II) dimethylaminoethoxyethylamine or (III) bis(γ,γ - dioctylamino)ethylpropylamine, was added to the modified IR in a quantity in excess of that of consumed maleic anhydride, and they were reacted at 160°C. under reduced pressure for three hours. The infrared absorption spectra of the reaction products showed the absorptions due to the carbonyls of the succinimide residues at 1,700 $cm^{-1}$ and 1,770 $cm^{-1}$, instead of the absorptions due to the carbonyls of the acid anhydride groups at 1,790 $cm^{-1}$ and 1,870 $cm^{-1}$. The modified IR containing N - (dimethylamino)succinimide residues had been formed when the modifying agent (I) was used, the modified IR containing N - (dimethylaminoethoxy)ethylsuccinimide residues had been formed when the modifying agent (II) was used, and the modified IR containing N - (bis(γ,γ - dioctylamino)ethyl)propylsuccinimide residues had been formed when the modifying agent (III) was used.

These three types of modified IR, unmodified IR and NR were employed to form rubber compositions (gum compounds) in accordance with the procedures of Example 1, except that the recipe shown in Table 3 was used. The physical properties of the uncured rubber compositions (unvulcanizates) at 25°C and 100°C, and those of the vulcanizates at 25°C were examined. The compositions were tested for extrusion with a Brabender test extruder. In Table 4, the word "good" indicates the results of extrusion which were comparable to those on unmodified IR, and the word "bad" indicates the results comparable to those on NR. The test results are shown in Table 4.

TABLE 3

| | |
|---|---|
| Rubber | 100 parts |
| HAF carbon black | 45 „ |
| Zinc white | 3 „ |
| Stearic acid | 1 part |
| Sulfur | 2 parts |
| Vulcanization accelerator[1)] | 1 part |
| Antioxidant[2)] | 1 „ |

[1)] as in Table 1
[2)] as in Table 1

TABLE 4

| | Example | Example | Example | Control (IR) | Control (NR) |
|---|---|---|---|---|---|
| Modifying agent added for further modification of IR modified with maleic anhydride | I | II | III | — | — |
| Mooney viscosity of composition ($ML_{1+4}$ 100°C) | 79 | 80 | 78 | 81 | 80 |
| Physical properties of unvulcanizate at 25°C | | | | | |
| Yield point (kg/cm$^2$) | 2.7 | 3.0 | 2.5 | 1.4 | 2.8 |
| $M_{300}$ (kg/cm$^2$) | 6.1 | 6.9 | 5.3 | 1.4 | 6.0 |
| Tensile strength (kg/cm$^2$) | 15.6 | 17.3 | 13.2 | 2.0 | 15.9 |
| Elongation at break (%) | 590 | 530 | 620 | 720 | 530 |
| Physical properties of unvulcanizate at 100°C | | | | | |
| Yield point ($\times 10^{-1}$ kg/cm$^2$) | 6 | 7 | 6 | 7 | 9 |
| $M_{300}$ ($\times 10^{-1}$ kg/cm$^2$) | 6 | 6 | 4 | 6 | 9 |
| Tensile strength ($\times 10^{-1}$ kg/cm$^2$) | 4 | 5 | 3 | 5 | 8 |
| Elongation at break (%) | 450 | 380 | 510 | 500 | 600 |
| Physical properties of vulcanizate at 25°C | | | | | |
| $M_{300}$ (kg/cm$^2$) | 143 | 147 | 153 | 132 | 148 |
| Tensile strength (kg/cm$^2$) | 297 | 298 | 300 | 296 | 303 |
| Elongation at break (%) | 560 | 560 | 540 | 570 | 550 |
| Hardness (JIS-A) | 62 | 64 | 65 | 60 | 64 |
| Extrusion test | Good | Good | Good | Good | Bad |

Modifying agent:

(I)

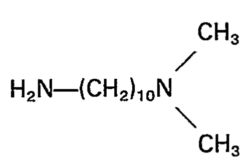

(II) 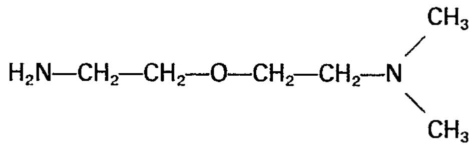

(III) 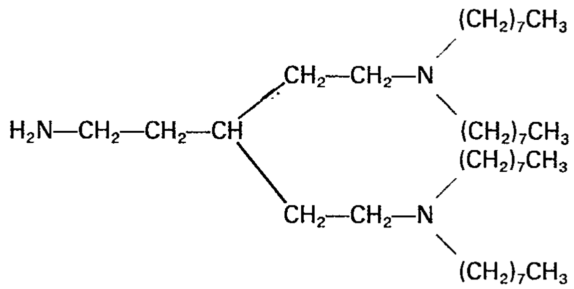

As can be seen from Table 4, the addition of the modifying agent (I), (II) or (III) to the modified IR containing succinic anhydride residues improved its tensile strength at 25°C. and the tensile strength, 300% modulus and hardness of its vulcanizate at 25°C. to a level comparable to those of NR, and its strength of unvulcanizate at 100°C. and its extrusion properties were comparable to those of IR. (The products of Example 1 were also examined for extrusion properties at 100°C. and tensile strength at 100°C. It was found that the product which was comparable to IR in tensile strength at 100°C. showed excellent extrusion properties comparable to those of IR, while the product comparable to NR in tensile strength at 100°C. showed only the extrusion properties comparable to those of NR. In other words, the general dependence of extrusion properties at 100°C. on tensile strength at 100°C. was ascertained).

Example 4

Different quantities of N-(γ-diethylamino)propylmaleimide were added to, and reacted with synthetic cis - 1,4 - polyisoprene rubber prepared with a Ziegler catalyst, and having a cis - 1,4 content of 98% and a molecular weight of 840,000 (Kuraprene IR-10, product of Kuraray Isoprene Chemical Co., Ltd., Japan). The components were first mixed at 100°C. for two minutes, and then kneaded at 220°C. for five minutes, with a Brabender Plasti-Corder. Each modified IR thus obtained was examined by an infrared spectrophotometer, and its infrared spectrum showed clear absorptions at 1,700 $cm^{-1}$ and 1,770 $cm^{-1}$ due to the carbonyls of succinimide residues, as shown in Figure 3. The quantity (moles per 100 repeating isoprene units in IR) of N - (γ - diethylamino)propylsuccinimide in the modified IR was determined by its infrared absorption spectrum, and is shown in Table 5.

For comparison purposes, a modified IR was prepared by employing maleic anhydride or maleimide instead of N - (γ - diethylamino)propylmaleimide. The quantity of such incorporated maleic anhydride or maleimide in the modified IR is also shown in Table 5.

TABLE 5

Kind of modifying agent and quantity of incorporated modifying agent (mole/100 isoprene units)

| Modified IR | N-(γ-diethylamino)propyl-maleimide | Maleic anhydride | Maleimide |
|---|---|---|---|
| A | 0.05 | — | — |
| B | 0.12 | — | — |
| C | 0.25 | — | — |
| D | 0.75 | — | — |
| E | — | 0.15 | — |
| F | — | — | 0.12 |

Rubber compositions were prepared from the various types of modified IR, unmodified IR and NR shown in Table 5 by kneading in accordance with the recipes shown in Table 6. The unvulcanized rubber compositions were press cured at 145°C for 30 minutes to form vulcanizates. The unvulcanized rubber compositions were tested for yield point, 300% modulus ($M_{300}$), tensile strength and elongation at break at

25°C and 100°C in accordance with the procedures of Example 1. The vulcanizates were likewise tested for 300% modulus ($M_{300}$), tensile strength and elongation at break at 25°C. They were also tested for hardness and tear strength. The results are shown in Table 6.

As can be seen from Table 6, four kinds of modified IR, (A) to (D) obtained by incorporating N - (γ - diethylamino)propylmaleimide were comparable to, or even better than NR in tensile strength and elongation at a low temperature (25°C.), whether they were unvulcanized or vulcanized. Their green strength at ordinary room temperature was drastically higher than that of unmodified IR. Their tensile strength at elevated temperature (100°C.) was sufficiently low to maintain good flowability under a relatively small load. This indicates their high workability. The hardness, 300% modulus and tear strength of their vulcanizates were higher than those of the products obtained by employing maleic anhydride and maleimide. The conventional products employing maleic anhydride and maleimide were high in tensile strength at an elevated temperature (100°C.), and low in flowability, though they had improved tensile strength at low temperature (25°C.).

TABLE 6

| Formulation No. | 1 | 2 | 3 | 4 | 5 | 6 | 7 | 8 |
|---|---|---|---|---|---|---|---|---|
| Recipe (parts) | | | | | | | | |
| NR | — | — | — | — | — | — | — | 100 |
| IR | — | — | — | — | — | — | 100 | — |
| Modified IR (A) | 100 | — | — | — | — | — | — | — |
| Modified IR (B) | — | 100 | — | — | — | — | — | — |
| Modified IR (C) | — | — | 100 | — | — | — | — | — |
| Modified IR (D) | — | — | — | 100 | — | — | — | — |
| Modified IR (E) | — | — | — | — | 100 | — | — | — |
| Modified IR (F) | — | — | — | — | — | 100 | — | — |
| Carbon black | 45 | 45 | 45 | 45 | 45 | 45 | 45 | 45 |
| Zinc white | 5 | 5 | 5 | 5 | 5 | 5 | 5 | 5 |
| Stearic acid | 3 | 3 | 3 | 3 | 3 | 3 | 3 | 3 |
| Sulfur | 2 | 2 | 2 | 2 | 2 | 2 | 2 | 2 |
| Vulcanization accelerator MAS | 1 | 1 | 1 | 1 | 1 | 1 | 1 | 1 |
| Antioxidant 224 | 1 | 1 | 1 | 1 | 1 | 1 | 1 | 1 |
| Mooney viscosity of composition ($ML_{1+4}$ 100°C) | 55 | 53 | 51 | 57 | 58 | 56 | 57 | 55 |
| Physical properties of unvulcanizate at 25°C | | | | | | | | |
| Yield point (kg/cm$^2$) | 1.5 | 1.5 | 1.7 | 1.7 | 1.5 | 1.4 | 1.1 | 1.9 |
| $M_{300}$ (kg/cm$^2$) | 1.5 | 2.5 | 3.5 | 5.0 | 2.1 | 2.4 | 0.7 | 4.0 |
| Tensile strength (kg/cm$^2$) | 3.1 | 6.0 | 9.9 | 15.0 | 5.0 | 5.9 | 0.6 | 12.8 |
| Elongation at break (%) | 610 | 580 | 570 | 550 | 670 | 570 | 680 | 550 |

TABLE 6 (contd.)

| Formulation No. | 1 | 2 | 3 | 4 | 5 | 6 | 7 | 8 |
|---|---|---|---|---|---|---|---|---|
| Physical properties of un-vulcanizate at 100°C | | | | | | | | |
| Yield point ($10^{-1}$ kg/cm$^2$) | 2 | 2 | 2 | 1 | 6 | 4 | 2 | 3 |
| $M_{300}$ ($10^{-1}$ kg/cm$^2$) | | 1 | 1 | 0.5 | 5 | 3 | | 2 |
| Tensile strength ($10^{-1}$ kg/cm$^2$) | 1 | 1 | 0.5 | 0.5 | 4 | 2 | 1 | 2 |
| Elongation at break (%) | 200 | 330 | 310 | 350 | 490 | 350 | 210 | 300 |
| Physical properties of vulcanizate at 25°C | | | | | | | | |
| $M_{300}$ (kg/cm$^2$) | 149 | 155 | 165 | 170 | 141 | 143 | 138 | 151 |
| Tensile strength (kg/cm$^2$) | 300 | 301 | 297 | 298 | 300 | 298 | 299 | 301 |
| Elongation at break (%) | 550 | 560 | 540 | 530 | 550 | 550 | 550 | 530 |
| Hardness (JIS-A) | 64 | 66 | 67 | 69 | 62 | 62 | 61 | 65 |
| Tear strength (kg/cm$^2$) | 77 | 75 | 74 | 74 | 63 | 64 | 76 | 88 |

Example 5

Synthetic cis-1,4-polyisoprene rubber (Kuraprene IR-10 of Kuraray Isoprene Chemical Co., Ltd., Japan) was dissolved in toluene to form a 10% solution of IR. N - (γ - dimethylamino)propylmaleimide was added to, and reacted with the solution at 100°C. for five hours in the presence of a catalyst (0.01% of benzoyl peroxide based on IR), whereby modified IR containing N - (γ - dimethylamino)propylsuccinimide residues in the quantity (mole per 100 repeating isoprene units in IR) shown in Table 7 was obtained. The rate of gelation in the modified IR was examined, and is shown in Table 7. The quantity of gel was determined by the following method: 1 g of rubber was dissolved in 150 cc. of toluene at room temperature. The mixture is shaken for 12 hours. Then insoluble matter is removed by filtration through a 200-mesh metal wire sieve. The soluble and the insoluble matter is weighed after vacuum drying.

For comparison purposes, four kinds of modified IR were prepared by employing maleic anhydride instead of N - (γ - dimethylamino)propylmaleimide. The quantity of incorporated maleic anhydride (i.e. succinic anhydride residue) and the rate of gelation in these modified IR are shown in Table 7.

TABLE 7

| Modified IR | G | H | I | J |
|---|---|---|---|---|
| Quantity of N-(γ-dimethyl-amino)propylsuccinimide residues (mole/100 isoprene units in IR) | 0.14 | 0.24 | — | — |
| Quantity of succinic an-hydride residues mole/100 isoprene monomer units in IR) | — | — | 0.14 | 0.27 |
| Rate of gelation (%) | 3 | 7 | 65 | 78 |

Rubber compositions were prepared from these modified IR in accordance with the recipes shown in Table 6, and vulcanized in accordance with the procedure described in Example 1. The physical properties of the unvulcanized compositions and the vulcanizates thereof were examined in accordance with the procedure of Example 1, and are shown in Table 8.

As shown in Table 8, the modified IR's obtained by employing N - (γ - dimethylamino)propylmaleimide Formulation Nos 9 and 10) were superior to the modified IR's prepared by using maleic anhydride (Formulation Nos. 11 and 12) in flowability of the unvulcanizate at elevated temperature (100°C.) and hardness, 300% modulus and tear strength of the vulcanizate.

TABLE 8

| Formulation No. | 9 | 10 | 11 | 12 | 13 | 14 |
|---|---|---|---|---|---|---|
| Recipe (parts) | | | | | | |
| NR | — | — | — | — | — | 100 |
| IR | — | — | — | — | 100 | — |
| Modified IR (G) | 100 | — | — | — | — | — |
| Modified IR (H) | — | 100 | — | — | — | — |
| Modified IR (I) | — | — | 100 | — | — | — |
| Modified IR (J) | — | — | — | 100 | — | — |
| Carbon black | 45 | 45 | 45 | 45 | 45 | 45 |
| Zinc white | 5 | 5 | 5 | 5 | 5 | 5 |
| Stearic acid | 3 | 3 | 3 | 3 | 3 | 3 |
| Sulfur | 2 | 2 | 2 | 2 | 2 | 2 |
| Vulcanization accelerator MAS | 1 | 1 | 1 | 1 | 1 | 1 |
| Antioxidant 224 | 1 | 1 | 1 | 1 | 1 | 1 |
| Mooney viscosity of composition ($ML_{1+4}$ 100°C) | 62 | 64 | 69 | 72 | 57 | 55 |
| Physical properties of unvulcanizate at 25°C | | | | | | |
| Yield point ($kg/cm^2$) | 1.7 | 1.9 | 1.7 | 1.8 | 1.1 | 1.9 |
| $M_{300}$ ($kg/cm^2$) | 2.9 | 4.0 | 2.6 | 4.0 | 0.7 | 4.0 |
| Tensile strength ($kg/cm^2$) | 9.8 | 12.5 | 9.1 | 11.9 | 0.6 | 12.8 |
| Elongation at break (%) | 540 | 530 | 510 | 490 | 680 | 550 |
| Physical properties of unvulcanizate at 100°C | | | | | | |
| Yield point ($\times 10^{-1}$ $kg/cm^2$) | 2 | 3 | 7 | 9 | 2 | 3 |
| $M_{300}$ ($\times 10^{-1}$ $kg/cm^2$) | 1 | | 6 | 7 | | 2 |
| Tensile strength ($\times 10^{-1}$ $kg/cm^2$) | 1 | 1 | 6 | 9 | 1 | 2 |
| Elongation at break (%) | 320 | 290 | 510 | 650 | 210 | 300 |
| Physical properties of vulcanizate at 25°C | | | | | | |
| $M_{300}$ ($kg/cm^2$) | 160 | 167 | 142 | 145 | 138 | 151 |
| Tensile strength ($kg/cm^2$) | 299 | 298 | 301 | 300 | 299 | 301 |
| Elongation at break (%) | 550 | 540 | 560 | 550 | 550 | 530 |
| Hardness (JIS-A) | 68 | 68 | 61 | 62 | 61 | 65 |
| Tear strength ($kg/cm^2$) | 77 | 76 | 62 | 60 | 76 | 88 |

**Claims**

1. Modified cis-1,4-polyisoprene rubber on the basis of a solid synthetic cis-1,4-polyisoprene rubber containing in its molecule per 100 repeating isoprene units at least 0.01 mole of a succinimide derivative of the general formula I

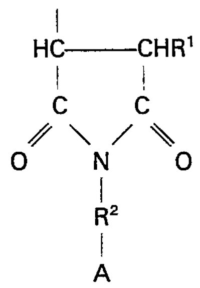

(I)

wherein $R^1$ is hydrogen or a covalent bond with the rubber molecule, $R^2$ is a hydrocarbon residue having not more than 20 carbon atoms, and optionally containing an oxygen or sulfur atom in its principal chain, and A is a dihydrocarbylamino residue having not more than 20 carbon atoms, or a heterocyclic residue having not more than 20 carbon atoms, and containing at least one tertiary nitrogen atom as a hetero nitrogen atom.

2. Modified cis-1,4-polyisoprene rubber as set forth in claim 1, wherein $R^2$ is an alkylene residue.

3. Modified cis-1,4-polyisoprene rubber as set forth in claim 1, wherein $R^2$ in said formula (I) is an alkoxyalkylene residue.

4. Modified cis-1,4-polyisoprene rubber as set forth in claim 1, wherein A in said formula (I) is a dialkylamino residue.

5. A process for manufacturing a modified cis-1,4-polyisoprene rubber, which comprises adding a compound selected from the group consisting of maleic anhydride, maleic acid, a maleic acid monoester and a maleic acid diester to a solid synthetic cis - 1,4 - polyisoprene rubber (optionally as a solution) in an amount of at least 0.01 mole per 100 repeating isoprene units, reacting the resulting product with an amine of the general formula (II)

$$H_2N—R^2—A \qquad (II)$$

wherein $R^2$ is a divalent hydrocarbon residue having not more than 20 carbon atoms, and optionally containing an oxygen or a sulfur atom in its principal chain, and A is a dihydrocarbylamino residue having not more than 20 carbon atoms, or a heterocyclic residue having not more than 20 carbon atoms, and containing at least one tertiary nitrogen atom as a hetero nitrogen atom, and subjecting the reaction product to dehydration or dealcoholization to form an imide ring.

6. A method as set forth in claim 5, wherein said amine is a N-(dialkylamino)alkylamine.

7. A process for manufacturing a modified cis-1,4-polyisoprene rubber, which comprises adding to a solid synthetic cis - 1,4 - polyisoprene rubber (optionally as a solution) at least 0.01 mole per 100 repeating isoprene units of a maleimide derivative of the general formula III

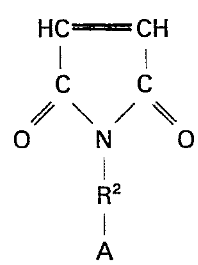

(III)

wherein $R^2$ is a hydrocarbon residue having not more than 20 carbon atoms, and optionally containing an oxygen or sulfur atom in its principal chain, and A is a dihydrocarbylamino residue having not more than 20 carbon atoms, or a heterocyclic residue having not more than 20 carbon atoms, and containing at least one tertiary nitrogen atom as a hetero nitrogen atom.

8. A method as set forth in claim 7, wherein said maleimide is a N - (dialkylamino)alkylmaleimide.

9. A method as set forth in claim 8, wherein said maleimide derivative is a compound selected from the group consisting of N - (β - dimethylamino)ethylmaleimide, N - (β - diethylamino)ethylmaleimide, N - (γ - dimethylamino)propylmaleimide, N - (γ - diethylamino)propylmaleimide, N - (δ - dimethylamino)butylmaleimide and N - (δ - diethylamino)butylmaleimide.

10. A vulcanized modified cis-1,4-polyisoprene rubber composition on the basis of a solid synthetic

cis - 1,4 - polyisoprene rubber, and having side chains formed by functional groups of the general formula I incorporated into said synthetic rubber, said modified rubber containing at least 0.01 mole of said functional group per 100 repeating units of isoprene monomer in said synthetic rubber:

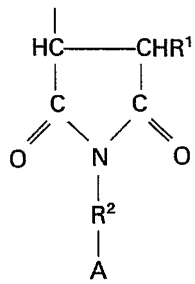

(I)

where $R^1$ stands for hydrogen, or a covalent bond with a rubber molecule, $R^2$ stands for a hydrocarbon residue having not more than 20 carbon atoms, and optionally containing an oxygen or sulfur atom in its principal chain, and A stands for a dihydrocarbylamino residue having not more than 20 carbon atoms, or a heterocyclic residue having not more than 20 carbon atoms, and containing at least one tertiary nitrogen atom as a hetero nitrogen atom.

11. The use of the modified cis-1,4-polyisoprene rubber as set forth in claims 1 to 4 for preparing vulcanized shaped articles.

**Patentansprüche**

1. Modifizierter cis-1,4-Polyisoprenkautschuk auf der Basis eines festen synthetischen cis-1,4-Polyisoprenkautschuks, enthaltend in seinem Molekül pro 100 wiederkehrende Isopreneinheiten mindestens 0,01 Mol eines Succinimid-Derivates der allgemeinen Formel I

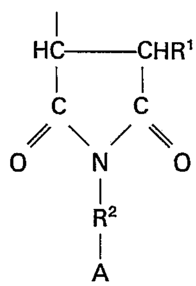

(I)

wobei $R^1$ Wasserstoff oder eine kovalente Bindung mit dem Kautschukmolekül ist, $R^2$ ein Kohlenwasserstoffrest mit nicht mehr als 20 Kohlenstoffatomen ist, der gegebenenfalls ein Sauerstoff- oder Schwefelatom in seiner Hauptkette enthält, und A ein Dihydrocarbylaminorest mit nicht mehr als 20 Kohlenstoffatomen oder ein heterocyclischer Rest mit nicht mehr als 20 Kohlenstoffatomen ist, der mindestens ein tertiäres Stickstoffatom als Hetero-Stickstoffatom enthält.

2. Modifizierter cis-1,4-Polyisoprenkautschuk gemäß Anspruch 1, wobei $R^2$ ein Alkylenrest ist.

3. Modifizierter cis-1,4-Polyisoprenkautschuk gemäß Anspruch 1, wobei $R^2$ in der Formel I ein Alkoxyalkylenrest ist.

4. Modifizierter cis-1,4-Polyisoprenkautschuk gemäß Anspruch 1, wobei A in der Formel I ein Dialkylaminorest ist.

5. Verfahren zur Herstellung eines modifizierten cis-1,4-Polyisoprenkautschuks, das die Zugabe einer Verbindung aus der Gruppe Maleinsäureanhydrid, Maleinsäure, Maleinsäuremonoester und Maleinsäurediester zu einem festen synthetischen cis - 1,4 - Polyisoprenkautschuk (gegebenenfalls in Lösung) in einer Menge von mindestens 0,01 Mol pro 100 wiederkehrende Isopreneinheiten, Umsetzung des erhaltenen Produktes mit einem Amin der allgemeinen Formel II

$$H_2N—R^2—A \qquad (II)$$

wobei $R^2$ ein zweiwertiger Kohlenwasserstoffrest mit nicht mehr als 20 Kohlenstoffatomen ist, der gegebenenfalls ein Sauerstoff- oder ein Schwefelatom in seiner Hauptkette enthält, und A ein Dihydrocarbylaminorest mit nicht mehr als 20 Kohlenstoffatomen oder ein heterocyclischer Rest mit nicht mehr als 20 Kohlenstoffatomen ist, der mindestens ein tertiäres Stickstoffatom als Hetero-Stickstoffatom enthält, und Dehydrierung oder Dealkoholisierung des Reaktionsproduktes zur Erzeugung eines Imidrings umfaßt.

6. Ein Verfahren gemäß Anspruch 5, wobei das Amin ein N-(dialkylamino)-alkylamin ist.

7. Ein Verfahren zur Herstellung eines modifizierten cis-1,4-Polyisoprenkautschuks, das die Zugabe von mindestens 0,01 Mol pro 100 wiederkehrende Isopreneinheiten eines Maleimid-Derivates der allgemeinen Formel III

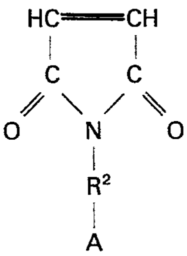

(III)

wobei $R^2$ ein Kohlenwasserstoffrest mit nicht mehr als 20 Kohlenstoffatomen ist, der gegebenenfalls ein Sauerstoffoder Schwefelatom in seiner Hauptkette enthält, und A ein Dihydrocarbylaminorest mit nicht mehr als 20 Kohlenstoffatomen oder ein heterocyclischer Rest mit nicht mehr als 20 Kohlenstoffatomen ist, der mindestens ein tertiäres Stickstoffatom als Hetero-Stickstoffatom enthält, zu einem festen synthetischen cis - 1,4 - Polyisoprenkautschuk (gegebenenfalls als Lösung) umfaßt.

8. Ein Verfahren gemäß Anspruch 7, wobei das Maleimid ein N-(dialkylamino)-alkylmaleimid ist.

9. Ein Verfahren gemäß Anspruch 8, wobei das Maleimid-Derivat eine Verbindung aus der Gruppe N - (β - dimethylamino) - äthylmaleimid, N - (β - diäthylamino) - äthylmaleimid, N - (γ-dimethylamino) - propylmaleimid, N - (γ - diäthylamino) - propylmaleimid, N - (δ - dimethylamino) - butylmaleimid und N - (δ - diäthylamino) - butylmaleimid ist.

10. Eine vulkanisierte modifizierte cis-1,4-Polyisopren-Kautschukmasse auf der Basis eines festen synthetischen cis - 1,4 - Polyisoprenkautschuks mit Seitenketten, die von funktionellen Gruppen der allgemeinen Formel I gebildet werden und in den synthetischen Kautschuk eingebaut sind, wobei der modifizierte Kautschuk mindestens 0,01 Mol der genannten funktionellen Gruppe pro 100 wiederkehrende Einheiten Isoprenmonomer in dem synthetischen Kautschuk enthält:

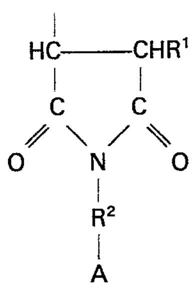

(I)

wobei $R^1$ für Wasserstoff oder für eine kovalente Bindung mit einem Kautschukmolekül steht, $R^2$ für einen Kohlenwasserstoffrest mit nicht mehr als 20 Kohlenstoffatomen steht, der gegebenenfalls ein Sauerstoff- oder Schwefelstom in seiner Hauptkette enthält, und A für einen Dihydrocarbylaminorest mit nicht mehr als 20 Kohlenstoffatomen oder einen heterocyclischen Rest mit nicht mehr als 20 Kohlenstoffatomen steht, der mindestens ein tertiäres Stickstoffatom als ein Hetero-Stickstoffatom enthält.

11. Verwendung des modifizierten cis-1,4-Polyisoprenkautschuks gemäß Ansprüche 1 bis 4 zur Herstellung vulkanisierter Formteile.

**Revendications**

1. Caoutchouc de cis-1,4-polyisoprène modifié à base d'un caoutchouc synthétique solide de cis - 1,4 - polyisoprène contenant dans sa molécule, pour 100 motifs répétés d'isoprène, au moins 0,01 mole d'un dérivé de succinimide de formula générale I:

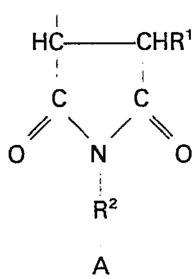

(I)

dans laquelle $R^1$ est un hydrogène ou une liaison covalente avec la molécule de caoutchouc, $R^2$ est un reste hydrocarboné n'ayant pas plus de 20 atomes de carbone et contenant éventuellement un atome d'oxygène ou, de soufre dans sa chaîne principale, et A est un reste dihydrocarbylamino n'ayant pas plus de 20 atomes de carbone ou un reste hétérocyclique n'ayant pas plus de 20 atomes de carbone, et contenant au moins un atome d'azote tertiaire comme hétéroatome d'azote.

2. Caoutchouc de cis-1,4-polyisoprène modifié comme indiqué dans la revendication 1, où $R^2$ est un reste alcoylène.

3. Caoutchouc de cis-1,4-polyisoprène modifié comme indiqué dans la revendication 1, où $R^2$, dans ladite formule (I), est un reste alcoxyalcoylène.

4. Caoutchouc de cis-1,4-polyisoprène modifié comme indiqué dans la revendication 1, où A, dans ladite formule (I), est un reste dialcoylamino.

5. Procédé pour la préparation d'un caoutchouc de cis-1,4-polyisoprène modifié qui comprend l'addition d'un composé choisi dans le groupe consitué par l'anhydride maléique, l'acide maléique, un monoester d'acide maléique et un diester d'acide maléique à un caoutchouc synthétique solide de cis-1,4-polyisoprène (éventuellement sous forme d'une solution) en une quantité d'au moins 0,01 mole pour 100 motifs répétés d'isoprène, la réaction du produit obtenu avec une amine de formule générale (II):

$$H_2N—R^2—A \qquad (II)$$

dans laquelle $R^2$ est un reste hydrocarboné divalent n'ayant pas plus de 20 atomes de carbone et contenant éventuellement un atome d'oxygène ou de soufre dans sa chaîne principale, et A est un reste dihydrocarbylamino n'ayant pas plus de 20 atomes de carbone ou un reste hétérocyclique n'ayant pas plus de 20 atomes de carbone, et contenant au moins un atome d'azote tertiaire comme hétéroatome d'azote, et la déshydratation ou la désalcoolisation du produit réactionnel pour former un cycle imide.

6. Procédé comme indiqué dans la revendication 5, où ladite amine est une N-(dialcoylamino)alcoylamine.

7. Procédé pour la préparation d'un caoutchouc de cis-1,4-polyisoprène modifié qui comprend l'addition à un caoutchouc synthétique solide de cis - 1,4 - polyisoprène (éventuellement sous forme d'une solution) d'au moins 0,01 mole pour 100 motifs répétés disoprène d'un dérivé de maléimide de formule générale III:

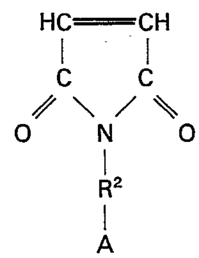

(III)

dans laquelle $R^2$ est un reste hydrocarboné n'ayant pas plus de 20 atomes de carbone et contenant éventuellement un atome d'oxygène ou de soufre dans sa chaîne principale, et A est un reste dihydrocarbylamino n'ayant pas plus de 20 atomes de carbone ou un reste hétérocyclique n'ayant pas plus de 20 atomes de carbone et contenant au moins un atome d'azote tertiaire comme hétéroatome d'azote.

8. Procédé comme indiqué dans la revendication 7, où ledit maléimide est un N-(dialcoylamino)alcoylmaléimide.

9. Procédé comme indiqué dans la revendication 8, où ledit dérivé de maléimide est un composé choisi dans le groupe constitué par le N - (β - diméthylamino)éthylmaléimide, le N - (β - diéthylamino)éthylmaléimide, le N - (γ - diméthylamino)propylmaléimide, le N - (γ - diéthylamino)propylmaléimide, le N - (δ - diméthylamino)butylmaléimide et le N - (δ - diéthylamino)butylmaléimide.

10. Composition de caoutchouc de cis-1,4-polyisoprène modifié vulcanisé à base d'un caoutchouc synthétique solide de cis - 1,4 - polyisoprène et ayant des chaînes latérales formées par des groupes fonctionnels de formule générale I incorporés audit caoutchouc synthétique, ledit caoutchouc modifié contenant au moins 0,01 mole dudit groupe fonctionnel pour 100 motifs répétés d'isoprène monomère dans ledit caoutchouc synthétique:

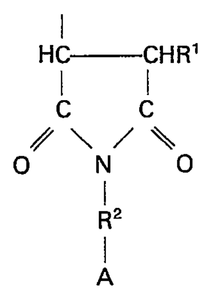

(I)

où $R^1$ représente un atome d'hydrogène ou une liaison covalente avec une molécule de caoutchouc, $R^2$ représente un reste hydrocarboné n'ayant pas plus de 20 atomes de carbone et contenant éventuellement un atome d'oxygène ou de soufre dans sa chaîne principale, et A représente un reste dihydrocarbylamino n'ayant pas plus de 20 atomes de carbone ou un reste hétérocyclique n'ayant pas plus de 20 atomes de carbone et contenant au moins un atome d'azote tertiaire comme hétéroatome d'azote.

11. Application du caoutchouc de cis-1,4-polyisoprène modifié comme indiqué dans les revendications 1 à 4 pour la préparation d'articles façonnés vulcanisés.

FIG. 1

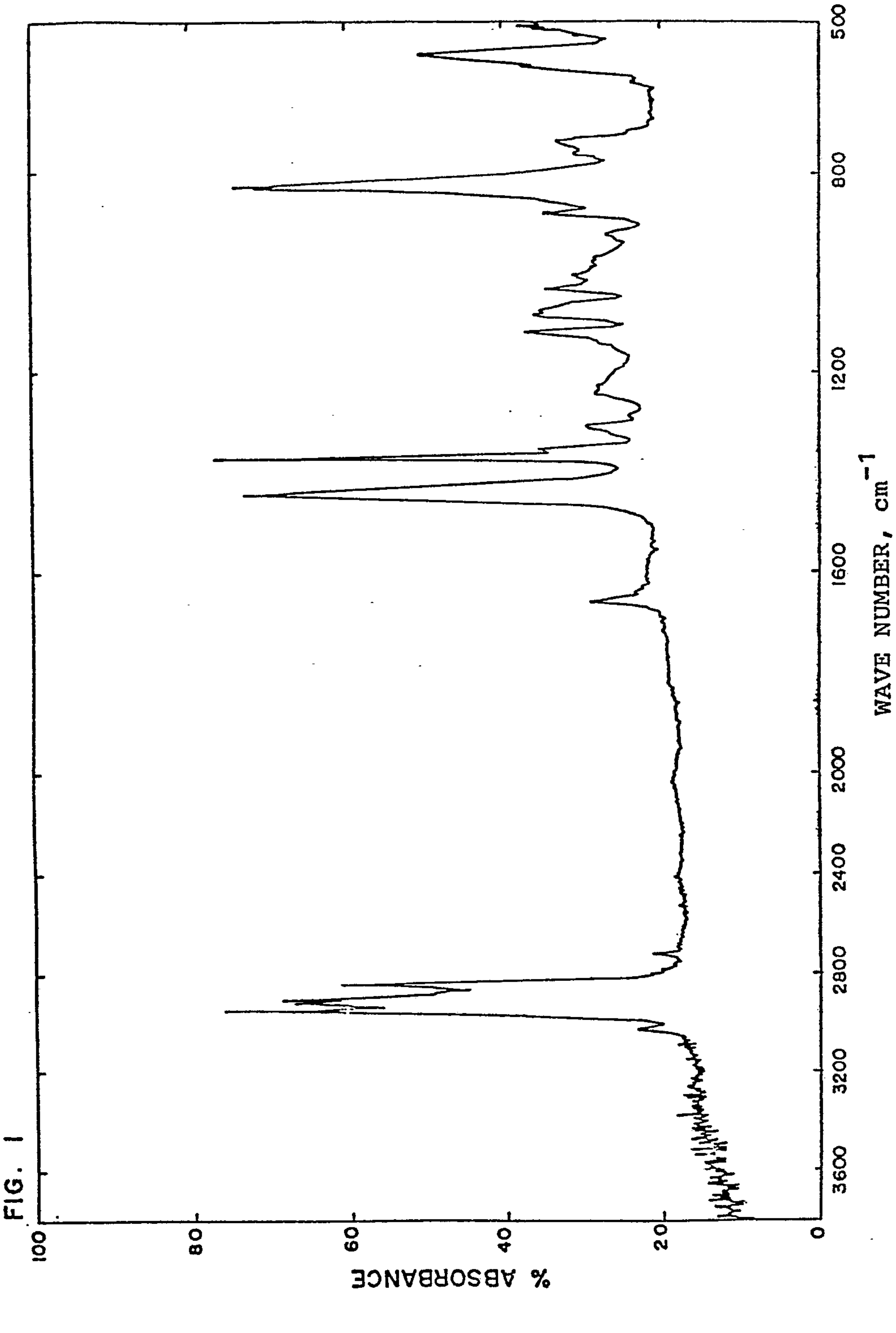
100
80
60
40
20
0
% ABSORBANCE
500
800
1200
1600
2000
2400
2800
3200
3600
WAVE NUMBER, cm-1

FIG. 2

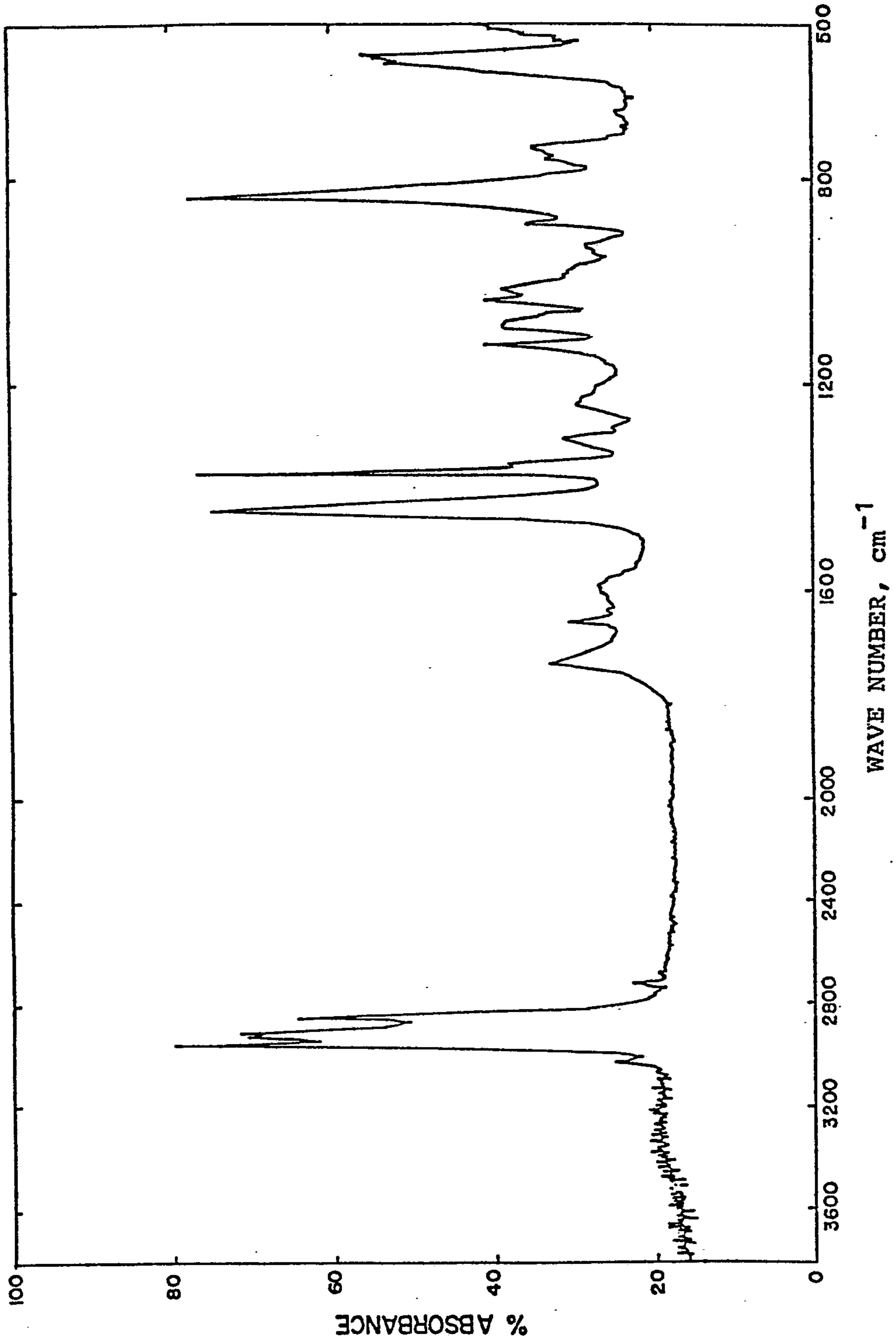
% ABSORBANCE
100
80
60
40
20
0
WAVE NUMBER, $cm^{-1}$
3600
3200
2800
2400
2000
1600
1200
800
500

FIG. 3

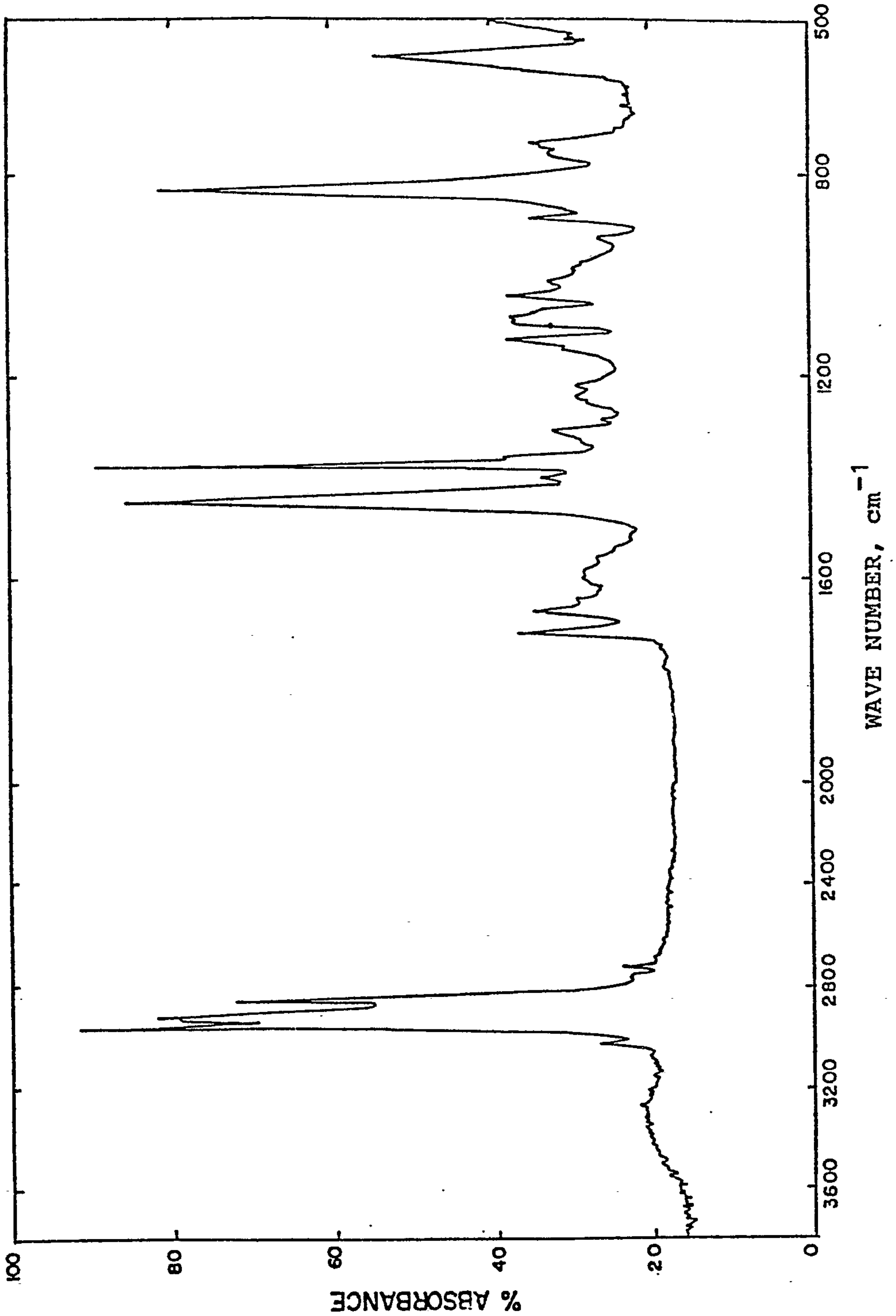
100
80
60
40
20
0
% ABSORBANCE
3600
3200
2800
2400
2000
1600
1200
800
500
WAVE NUMBER, cm$^{-1}$

FIG. 4

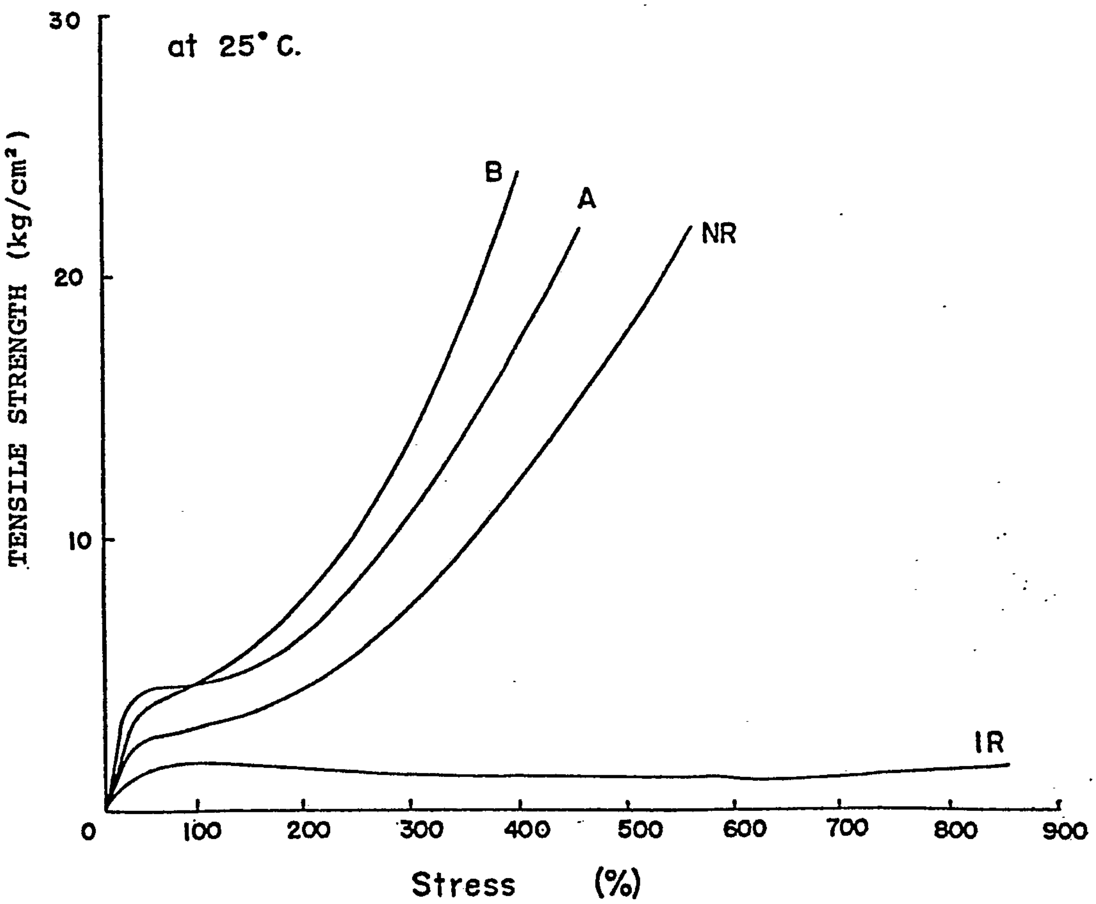
at 25° C.
TENSILE STRENGTH (kg/cm²)
30
20
10
0
B
A
NR
IR
100
200
300
400
500
600
700
800
900
Stress (%)

FIG. 5

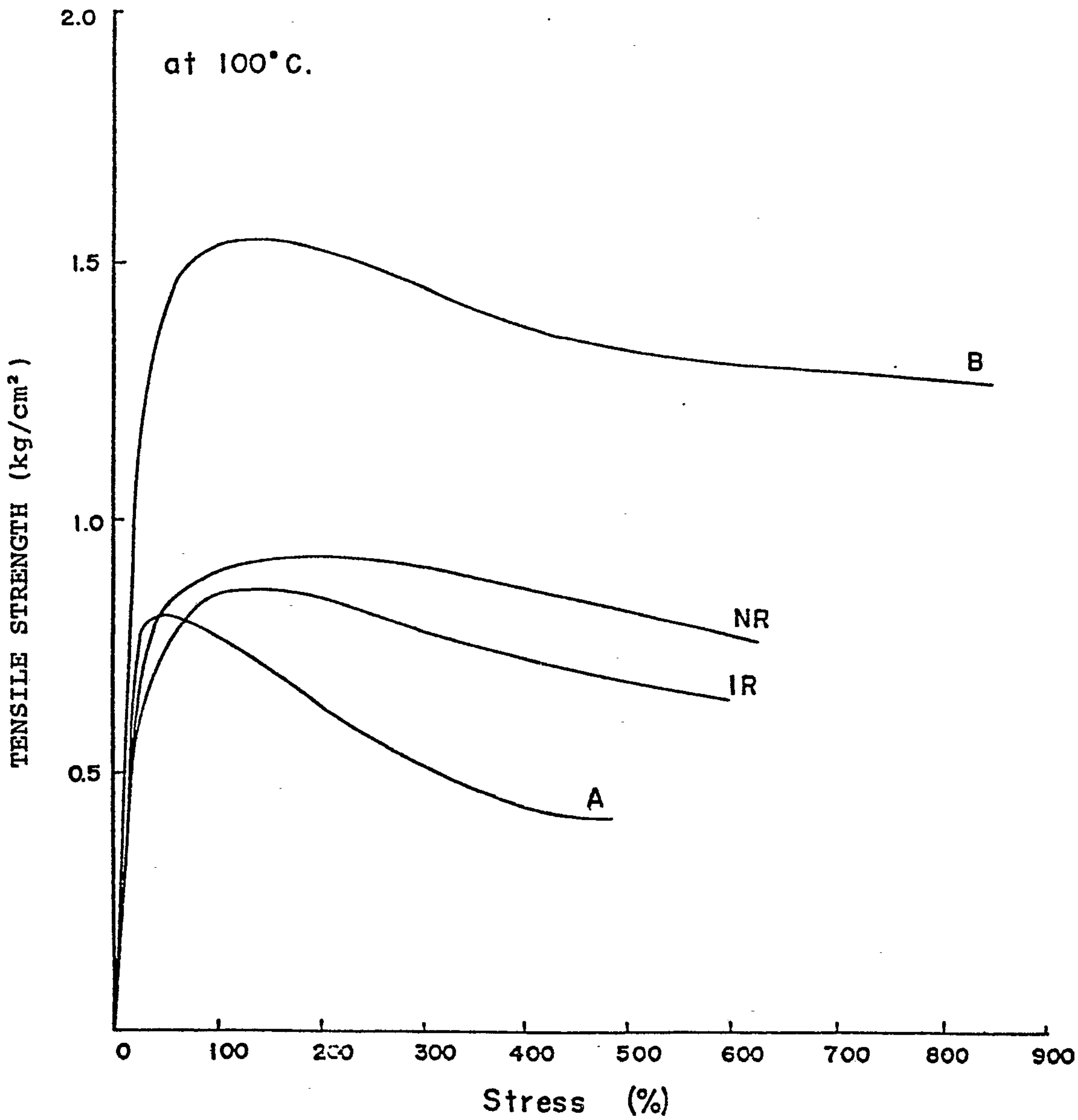

2.0
at 100°C.
1.5
1.0
0.5
TENSILE STRENGTH (kg/cm²)
B
NR
IR
A
0
100
200
300
400
500
600
700
800
900
Stress (%)